Europäisches Patentamt

European Patent Office

Office européen des brevets

(19)

(11) **EP 0 717 794 B1**

(12) **EUROPÄISCHE PATENTSCHRIFT**

(45) Veröffentlichungstag und Bekanntmachung des Hinweises auf die Patenterteilung:
**06.08.1997 Patentblatt 1997/32**

(21) Anmeldenummer: **94924630.0**

(22) Anmeldetag: **02.09.1994**

(51) Int Cl.$^6$: **C25D 13/14**, C09D 7/12, B01J 23/18

(86) Internationale Anmeldenummer:
**PCT/AT94/00123**

(87) Internationale Veröffentlichungsnummer:
**WO 95/07377 (16.03.1995 Gazette 1995/12)**

(54) **VERFAHREN ZUR HERSTELLUNG VON WISMUTSALZE ENTHALTENDEN ZUBEREITUNGEN UND DEREN VERWENDUNG ALS KATALYSATORKOMPONENTE IN KATHODISCH ABSCHEIDBAREN ELEKTROTAUCHLACKEN**

METHOD FOR PRODUCING PREPARATIONS CONTAINING BISMUTH SALTS AND THEIR USE AS CATALYTIC COMPONENTS IN ELECTROPHORETIC PAINTS APPLIED BY CATHODIC DEPOSITION

PROCEDE DE FABRICATION DE PREPARATIONS RENFERMANT DES SELS DE BISMUTH ET LEUR UTILISATION COMME COMPOSANTS CATLYSEURS DANS DES PEINTURES ELECTROPHORETIQUES DEPOSABLES A LA CATHODE

(84) Benannte Vertragsstaaten:
**AT BE DE ES FR GB IT NL SE**

(30) Priorität: **07.09.1993 AT 1794/93**

(43) Veröffentlichungstag der Anmeldung:
**26.06.1996 Patentblatt 1996/26**

(73) Patentinhaber: **Vianova Resins AG 8402 Werndorf (AT)**

(72) Erfinder:
• **FEOLA, Roland A-8045 Graz (AT)**
• **BURGMANN, Brigitte A-2514 Traiskirchen (AT)**
• **KURZMANN, Franz A-8413 St.Georgen/Stiefing (AT)**

(56) Entgegenhaltungen:
**EP-A- 0 376 674        EP-A- 0 379 246**

• **DERWENT ACCESSION No. 83-18 555, Questel Telesystems (WPIL), DERWENT PUBLICATIONS LTD., London; & JP,A,58 006 243,**

**Beschreibung**

Die Erfindung betrifft ein Verfahren zur Herstellung von Wismutsalze enthaltenden Zubereitungen, wobei Wismutoxid in spezifischer Weise mit Milchsäure umgesetzt und anschließend das erhaltene Gemisch von Wismutyllactat und Wismutlactat in einem Lackbindemittel dispergiert wird, und die Verwendung dieser Zubereitungen als Katalysatorkomponente in kathodisch abscheidbaren Elektrotauchlacken.

Aus der AT 397.820 B1 ist ein Verfahren zur Herstellung von katalysatorhältigen, nach Protonisierung wasserverdünnbaren, kationischen Lackbindemitteln bekannt, die durch Umesterung und/oder Umamidierung und/oder Umurethanisierung und/oder durch Reaktion endständiger Doppelbindungen vernetzbare kationische Lackbindemittel und Wismutsalze von aliphatischen Hydroxycarbonsäuren, vorzugsweise der Milchsäure oder Dimethylolpropionsäure, enthalten.

Gemäß diesem Vorschlag werden die Wismutsalze durch die Reaktion von 1,0 Mol Wismutoxid mit 7,0 Mol der jeweiligen Hydroxycarbonsäure erhalten, wobei der Überschuß von 1,0 Mol Säure eine möglichst quantitative Umsetzung gewährleisten soll. Deionisiertes Wasser und die Säure werden vorgelegt und bei 70°C wird unter Rühren handelsübliches Wismutoxid ($Bi_2O_3$) portionsweise zugegeben. Der Niederschlag wird abfiltriert und bei einer Temperatur von 40 bis 60°C getrocknet.

Die Herstellung der katalysatorhältigen Lackbindemittel erfolgt in der Weise, daß man vor der Zugabe wesentlicher Mengen von Wasser als Verdünnungsmittel das Wismutsalz der protonisierten Bindemittellösung zugibt und anschließend den Ansatz mehrere Stunden homogenisiert.

Gemäß der WO 93/24578, Ansprüche 3 und 5, wird das Wismutsalz in einem als Pastenharz verwendbaren Lackbindemittel am Dissolver und anschließend auf einer Perlmühle, gegebenenfalls in Gegenwart von Pigmenten, homogenisiert.

Die in den beiden Patentschriften beschriebenen Verfahren weisen in ihrer technischen Anwendbarkeit einige wesentliche Nachteile auf.

Einerseits neigen die isolierten und getrockneten Wismutsalze während ihrer Lagerung zur Agglomeration. Andererseits ist für den "Aufschluß" des Wismutoxids eine größere Menge an Säure erforderlich als anschließend zur Neutralisation des gesamten Lackbindemittels benötigt wird. In den Tauchlack wird somit überschüssige Säure eingebracht, wodurch sich der Strombedarf während des Betriebs des Tauchbeckens merkbar erhöht.

Die in den beiden Patentschriften beschriebene spezielle Ausführungsform, im Falle der Verwendung von Milchsäure oder Dimethylolpropionsäure als Neutralisationsmittel für das gesamte Bindemittel, statt der Wismutsalze ganz oder teilweise die entsprechenden Mengen an Wismutoxid oder Wismuthydroxid zu homogenisieren - bei dieser insitu Methode ist keine Isolierung der Wismutsalze erforderlich - ist ebenfalls nur bedingt zielführend. Entsprechend formulierte Lacke neigen nach längerer Lagerung in vielen Fällen zur Sedimentbildung, außerdem ist eine Verringerung der katalytischen Wirksamkeit der Wismutsalze festzustellen.

Wird hingegen die Menge an Säure auf weniger als 7,0 Mol pro 1,0 Mol Wismutoxid reduziert, so bildet das Reaktionsgemisch während des "Aufschlusses" häufig eine kristallin-klebrige Masse, die sich weder rühren noch filtrieren läßt.

Auch die Verwendung eines Pastenharzes gemäß der WO 93/23578 ändert nichts an den aufgezeigten Schwierigkeiten.

Es wurde nun überraschenderweise gefunden, daß eine Änderung des "Aufschlußverfahrens" für das Wismutoxid die praxisgerechte Verwendung von Wismutsalzen der Milchsäure als Katalysatorkomponente in kathodisch abscheidbaren Elektrotauchlacken ermöglicht.

Die Erfindung betrifft demgemäß ein Verfahren zur Herstellung von Wismutsalze enthaltenden Zubereitungen zur Katalysierung der Vernetzungsreaktionen von kationischen Lackbindemitteln, welches dadurch gekennzeichnet ist, daß man

A) 1,0 Mol Wismutoxid schrittweise mit insgesamt 4,0 Mol Milchsäure umsetzt, wobei man

Aa) zuerst 1,0 Mol Wismutoxid und 2,0 Mol Milchsäure in Gegenwart von Wasser bei 20 bis 40°C während 30 bis 60 Minuten homogenisiert,
Ab) das nach Aa) erhaltene Gemisch nach Zugabe von 1,0 Mol Milchsäure bei 30 bis 40°C wiederum während 30 bis 60 Minuten homogenisiert und
Ac) den Vorgang gemäß Ab) wiederholt, wobei man so lange homogenisiert, bis sich die Farbe des Reaktionsansatzes von ursprünglich gelb auf weiß geändert hat,

und

B) anschließend die nach Aa) bis Ac) erhaltene Mischung von Wismutyllactat und Wismutlactat mit einem kationischen Lackbindemittel kombiniert, mit der Maßgabe, daß der Gehalt an Wismut, bezogen auf den gesamten Feststoffgehalt der Zubereitung, 25 bis 45 Gew.-%, vorzugsweise 30 bis 40 Gew.-%, beträgt.

Die Erfindung betrifft weiters die Verwendung der erfindungsgemäß hergestellten Zubereitungen, gegebenenfalls in Form von Pigmentpasten, in Kombination mit durch Umesterung und/oder Umamidierung und/oder Umurethanisierung und/oder durch Reaktion endständiger Doppelbindungen vernetzbaren kationischen Lackbindemitteln, wobei diese identisch mit oder verschieden von dem in der Zubereitung enthaltenen Lackbindemittel sind und gegebenenfalls als Dispersionen vorliegen, zur Formulierung von kathodisch abscheidbaren Elektrotauchlacken mit der Maßgabe, daß diese einen Gehalt an Wismut, bezogen auf den Feststoffgehalt des gesamten Lackbindemittels, von 0,5 bis 3,0 Gew.-%, vorzugsweise von 0,8 bis 2,5 Gew.-%, aufweisen.

Die Erfindung betrifft schließlich kathodisch abscheidbare Elektrotauchlacke mit einem Gehalt an Wismut, bezogen auf den Feststoffgehalt des gesamten Lackbindemittels, von 0,5 bis 3,0 Gew.-%, vorzugsweise von 0,8 bis 2,5 Gew.-%, welche die erfindungsgemäß hergestellten Zubereitungen, gegebenenfalls in Form von Pigmentpasten, sowie weitere durch Umesterung und/oder Umamidierung und/oder Umurethanisierung und/oder durch Reaktion endständiger Doppelbindungen vernetzbare kationische Lackbindemittel enthalten, wobei diese identisch mit oder verschieden von dem in der Zubereitung enthaltenen Lackbindemittel sind und gegebenenfalls als Dispersionen vorliegen.

Das beanspruchte Verfahren ist technologisch einfach und auch bei großen Ansätzen ausgezeichnet reproduzierbar. Die kathodisch abscheidbaren Elektrotauchlacke weisen ausgezeichnete Applikations- und Filmeigenschaften auf. Es kann auf die Verwendung von Blei-und Zinnverbindungen als Katalysatoren verzichtet werden.

Die Herstellung der Zubereitungen erfolgt in der im Hauptanspruch definierten Vorgangsweise. Nach den Reaktionsschritten Aa) bis Ac) wird die Mischung von Wismutyllactat und Wismutlactat mit einem kationischen Lackbindemittel kombiniert. Es ist vorteilhaft, wenn die Zubereitungen eine Viskosität im Bereich von 4000 bis 10000 mPa.s/23° aufweisen. Sie sind somit auch bei Raumtemperatur fließfähig und gut manipulierbar.

Üblicherweise werden für die Zubereitungen die selben kationischen Lackbindemittel ausgewählt, wie sie als "Basisharze" für die Herstellung der kathodisch abscheidbaren Elektrotauchlacke verwendet werden, jedoch ohne Härterkomponente und nicht als Dispersion.

Derartige durch Umesterung und/oder Umamidierung und/oder Umurethanisierung und/oder durch Reaktion endständiger Doppelbindungen vernetzbare Lackbindemittel sind in großer Anzahl aus der Literatur bekannt. Ein näheres Eingehen auf den Aufbau und die Chemie dieser Produkte ist daher nicht notwendig.

Falls die Zubereitungen in Form von Pigmentpasten weiter verarbeitet werden, so ist es vorteilhaft, im Reaktionsschritt (B) spezielle Pigmentpastenharze zu verwenden, wie sie beispielsweise in DE 2634211 C2, DE-OS-2634229, EP 107088 A1, EP 107089 A1, EP 107098 A1, EP 251772 A2, EP 336599 A2, AT-PS 380 264 und AT-PS 394372 beschrieben werden.

Die Formulierung, Weiterverarbeitung bzw. Anwendung der Pigmentpasten und Lacke ist dem Fachmann bekannt.

Die kathodisch abscheidbaren Elektrotauchlacke weisen auch über einen längeren Zeitraum eine sehr gute Lagerstabilität auf, d. h. weder eine Sedimentbildung noch einen Abfall der Reaktivität. Die Eigenschaften der abgeschiedenen Naßfilme bzw. der vernetzten Lackfilme entsprechen völlig dem von der Automobilindustrie geforderten sehr hohen Qualitätsstandard.

Die Beispiele erläutern die Erfindung, ohne sie in ihrem Umfang einzuschränken. Alle Angaben in Teilen oder Prozenten beziehen sich auf Gewichtseinheiten.

Folgende Abkürzungen werden in den Beispielen verwendet:

EEW      Epoxidharzäquivalentgewicht, d. h. die eine Epoxidgruppe enthaltende Menge (in Gramm) eines Epoxidharzes

EGL      Ethylenglykolmonoethylether

DEAPA Diethylaminopropylamin

CE       Glycidylester einer $C_9,C_{11}$-tert.-Monocarbonsäure

BUGL      Monoethylenglykolmonobutylether

MP       Methoxypropanol

TDI       Toluylendiisocyanat (handelsübliches Isomerengemisch)

DGDME Diethylenglykoldimethylether

PF 91     Paraformaldehyd 91%ig

VEW      vollentsalztes Wasser

MEQ      Milliäquivalente Säure pro 100 g Bindemittel (Festsubstanz)

1. Herstellung der Wismutsalze enthaltenden Zubereitungen KAT 1 bis KAT 4 beispiele 1 bis 4)

Aus den in der Tabelle 1 angegebenen Produkten in den entsprechenden Mengenverhältnissen werden in nachstehend beschriebener Weise die Wismutsalze enthaltenden Zubereitungen KAT 1 bis KAT 4 hergestellt:

In ein geeignetes Reaktionsgefäß mit einer Rühreinrichtung werden VEW und die Milchsäure I (2,0 Mol) vorgelegt. Unter Rühren wird Wismutoxid (1,0 Mol) portionsweise zugegeben. Die Mischung wird während 30 bis 60 Minuten homogenisiert, wobei die Temperatur auf ca. 40°C ansteigt.

Anschließend wird die Milchsäure II (1,0 Mol) zugegeben. Die Mischung wird wiederum während 30 bis 60 Minuten homogenisiert.

Nach der Zugabe der Milchsäure III (1,0 Mol) wird der Ansatz so lange homogenisiert, bis sich dessen Farbe von ursprünglich gelb auf weiß (ohne merkbaren Gelbstich) geändert hat.

Der so erhaltenen Mischung von Wismutyllactat und Wismutlactat wird abschließend ein kationisches Lackbindemittel in einer Menge zugegeben, daß der Ansatz auch nach längerer Lagerung gut fließfähig bleibt und das Wismutsalz nicht sedimentiert (Viskositätsbereich ca. 4000 bis 10000 mPa.s/23°C).

Tabelle 1

| | Beisp. 1 KAT 1 | Beisp. 2 KAT 2 | Beisp. 3 KAT 3 | Beisp. 4 KAT 4 |
|---|---|---|---|---|
| VEW | 300 | 300 | 300 | 300 |
| Milchsäure I (2,0 Mol) | 180 | 180 | 180 | 180 |
| $Bi_2O_3$ | 466 | 466 | 466 | 466 |
| Milchsäure II (1,0 Mol) | 90 | 90 | 90 | 90 |
| Milchsäure III (1,0 Mol) | 90 | 90 | 90 | 90 |
| Bindemittel B1 (65 %) | 500 | -- | -- | -- |
| Bindemittel B3 (65 %) | -- | 400 | -- | -- |
| Bindemittel B4 (40 %) | -- | -- | 1126 | -- |
| Bindemittel B2 (57 %) | -- | -- | -- | 800 |
| | 1626 | 1526 | 2252 | 1926 |
| Gesamtfeststoff | 1151 | 1086 | 1276 | 1282 |
| Wismutgehalt/Gesamtfeststoff | 36,3 % | 38,5 % | 32,7 % | 32,6 % |

2. Herstellung der für die Zubereitungen KAT 1 bis KAT 4 und für die Formulierung der Elektrotauchlacke beispielsweise verwendeten Bindemittel-Komponenten:

2.1. Bindemittel B1:

190 g eines Bisphenol-A-Epoxidharzes (EEW ca. 190) und 1425 g eines Bisphenol-A-Epoxidharzes (EEW ca. 475) werden bei 100 °C in 597 g EGL gelöst. Die Lösung wird auf 60 °C gekühlt und mit 126 g Diethanolamin versetzt. Man steigert die Temperatur während 2 Stunden langsam auf 80°C. Anschließend werden 169 g DEAPA zugegeben. Die Temperatur wird in 2 Stunden auf 120°C gesteigert. Bei dieser Temperatur werden 478 g CE zugegeben, der Ansatz wird 5 Stunden bei 130°C gerührt und schließlich mit EGL auf einen Feststoffgehalt von 65 Gew.-% verdünnt. Das Harz hat eine Aminzahl von 91 mg KOH/g und eine Hydroxylzahl von 265 mg KOH/g, jeweils auf den Feststoff bezogen.

2.2. Bindemittel B2:

2 g Azobisisobutyronitril werden in 40 g Isopropanol unter Erwärmen gelöst. Zur klaren Lösung wird bei Rückflußtemperatur (ca. 84°C) ein Monomerengemisch, bestehend aus 20 g Glycidylmethacrylat, 20 g Hydroxyethylmethacrylat, 20 g Methylmethacrylat und 40 g 2-Ethylhexylacrylat, in dem 2 g Azobisisobutyronitril klar gelöst sind, während 2 Stunden gleichmäßig zugegeben. Die Reaktionsmasse wird weitere 3 Stunden bei Rückflußtemperatur gerührt. Anschließend wird eine homogene Lösung von 16 g Diisopropanolamin in 20 g BUGL der Reaktionsmasse bei 85°C rasch zugegeben, der Ansatz noch 2 Stunden bei 90°C gerührt und schließlich das Produkt bei 90°C mit 13 g EGL und bei 40°C mit Aceton verdünnt.

Das Harz hat einen Feststoffgehalt von 57 Gew.-%, eine Aminzahl von 58 mg KOH/g und eine Hydroxylzahl von 250 mg KOH/g, jeweils auf den Feststoff bezogen.

2.3. Bindemittel B3:

570 g eines Epoxidharzes auf Basis von Bisphenol A (EEW ca. 190) und 317 g MP werden auf 60°C erwärmt, innerhalb von 2 Stunden mit einer Mischung aus 116 g (0,9 Mol) Ethylhexylamin und 163 g (0,15 NH-Aquivalente) eines polymeren Amins (siehe unten) versetzt und bis zu einem MEQ-Wert von 2,06 reagiert. Anschließend werden 1330 g (2,1 Mol) einer 75 %igen Lösung eines Bisphenol A-Epoxidharzes (EEW ca. 475) in MP zugegeben. In der Folge wird bei 60°C innerhalb einer Stunde eine Lösung von 189 g (1,8 Mol) Diethanolamin in 176 g MP zugegeben und die Reaktion bis zu einem MEQ-Wert von 1,57 geführt. Nach weiterer Zugabe einer Lösung von 78 g (1,2 Mol) DEAPA in 54 g MP innerhalb einer Stunde wird bei 60°C bis zu einem MEQ-Wert von 1,46 reagiert. Die Temperatur wird auf 90°C und anschließend innerhalb einer weiteren Stunde auf 120°C gesteigert. Bei Erreichen einer Viskosität (GARDNER-HOLD; 6 g Harz + 4 g MP) von I-J wird mit MP auf einen Feststoffgehalt von 65 Gew.-% verdünnt. Das Produkt hat eine Aminzahl von 117 mg KOH/g und eine Hydroxylzahl von 323 mg KOH/g, jeweils auf den Feststoff bezogen.

Das polymere Amin wird durch Umsetzung von 1 Mol Diethylentriamin mit 3,1 Mol 2-Ethylhexylglycidylether und 0,5 Mol eines Bisphenol A-Epoxidharzes (EEW ca. 190) in 80%iger MP-Lösung hergestellt. Das Produkt weist eine Viskosität (DIN 53211/20°C; 100 g Harz + 30 g MP) von 60 bis 80 Sekunden auf.

2.4. Bindemittel B4:

(gemäß AT-PS 394372, Beispiel 1)

In ein geeignetes Reaktionsgefäß, ausgestattet mit Rührer, Thermometer und Destillationsvorrichtung, werden 258 Tle (2 Mol) 2-Ethylhexylamin vorgelegt, auf 80°C erwärmt und anschließend 380 Tle eines aliphatischen Epoxidharzes (Basis Polypropylenglykol, EEW ca. 190) gleichmäßig innerhalb einer Stunde zugegeben. Dabei steigt die Temperatur auf 120°C. Der Ansatz wird eine weitere Stunde bei 120°C gehalten. Anschließend werden 693 Tle BUGL und bei 70°C 1900 Tle eines Epoxidharzes auf Bisphenol A-Basis (EEW ca. 475) zugegeben. Es wird der Ansatz wieder auf 120°C erwärmt und die Reaktion bei dieser Temperatur 1 1/2 Stunden fortgeführt. Das Zwischenprodukt weist einen Anteil an Polyoxyalkylenstruktureinheiten von 11 Gew.-% und einen Anteil an Alkylresten mit mehr als 3 C-Atomen von 9 Gew.-% auf.

Zu diesem Zwischenprodukt werden bei 100°C 204 Tle (2 Mol) Dimethylaminopropylamin zugegeben. Nach 1 Stunde bei 100°C werden dem Ansatz 66 Tle (2 Mol) PF 91 zugegeben und bei ca. 140°C unter azeotroper Destillation mit Methylisobutylketon als Schleppmittel ca. 36 Tle Reaktionswasser entfernt. Danach wird das Methylisobutylketon unter Vakuum abgezogen, die Masse bei ca. 80°C mit 200 Tlen 30%iger Essigsäure (36 mMol/100 Feststoff) neutralisiert und mit 3265 Tlen VEW auf einen Feststoffgehalt von ca. 40 % verdünnt.

2.5. Vernetzungskomponente VK 1:

In einem Reaktionsgefäß, welches mit einer für das Azeotropverfahren geeigneten Einrichtung und mit einer Glokkenbodenkolonne zur Abtrennung der bei der partiellen Umesterung gebildeten Alkoholkomponente ausgestattet ist, werden zu einer Mischung aus 160 g (1 Mol) Malonsäurediethylester, 0,34 g (0,004 Mol) Piperidin und 0,22 g (0,004 Mol) Ameisensäure 85 %ig bei 80°C 29,7 g (0,9 Mol) PF 91 portionsweise so zugegeben, daß bei Einsetzen der exothermen Reaktion eine Temperatur von 95°C nicht überschritten wird. Das Reaktionsgemisch wird bei 95°C gerührt, bis der PF 91 vollständig gelöst ist. Die Temperatur wird unter einsetzender Wasserabspaltung innerhalb von 2 Stunden auf 110°C erhöht. Nach Erreichen von 110°C werden mit Spezialbenzin (Siedebereich 80 - 120°C) als Schleppmittel insgesamt 9 g Wasser abdestilliert. Unter Anlegen von Vakuum wird anschließend das eingesetzte Schleppmittel entfernt.

Nach Zugabe von 22,8 g (0,3 Mol) 1,2-Propylenglykol wird der Ansatz bis zum Destillationsbeginn (140-150°C) erhitzt. Bei steigender Temperatur werden 27 Tle (0,6 Mol) Ethanol abdestilliert. Das erhaltene Produkt weist einen Feststoffgehalt (120°C, 30 Minuten) von ca. 92 Gew.-%, eine OH-Zahl unter 5 mg KOH/g, eine Grenzviskositätszahl von ca. 5,2 ml/g (20°C, Dimethylformamid) und einen Brechungsindex n 20/d von 1,4670 auf.

2.6. Vernetzungskomponente VK 2:

Umsetzungsprodukt von 134 g (1 Mol) Trimethylolpropan mit 851 g (2,8 Mol) eines mit 2-Ethylhexanol halbblokkierten TDI in 70 %iger DGDME-Lösung.

2.7. Vernetzungskomponente VK 3:

134 g (1 Mol) Trimethylolpropan werden mit 160 g (1 Mol) Malonsäurediethylester versetzt und bis zum Destillationsbeginn (ca. 140 - 150°C) erhitzt. Bei steigender Temperatur (bis 180°C) werden 46 g (1 Mol) Ethanol abdestilliert. Nach beendeter Reaktion wird mit 128 g DGDME verdünnt und auf 60°C gekühlt. Anschließend werden 264 g (1 Mol bzw. 1 NCO-Aquivalent) eines Reaktionsproduktes aus 1 Mol TDI und 1 Mol EGL innerhalb von 4 Stunden zugegeben und bei 60°C auf einen NCO-Gehalt unter 0,02 Milliäquivalente pro g Probe reagiert.

Das erhaltene Produkt hat einen Feststoffgehalt von 80 ± 2 Gew.-% (30 Minuten, 120°C), eine Viskosität nach GARDNER - HOLD (10 g Produkt + 2 g DGDME) von K und einen Brechnungsindex n 20/d von 1,4960.

3. Prüfung der Wismutsalze enthaltenden Zubereitungen KAT 1 bis KAT 4 als Katalysatorkomponente in kathodisch abscheidbaren Elektrotauchlacken

3.1. Herstellung der Lacke 1 bis 6

| | |
|---|---|
| 2499 | Bindemittel B4 (40 %) |
| 40 | Farbruß |
| 4960 | Titandioxid |
| 92 | Ameisensäure 5 n |
| 2409 | VEW |
| 10000 | Pigmentpaste, 60 %ig |

Die der Tabelle 2 entsprechenden Mengen an KAT 1 bis KAT 4 werden dem Ansatz entweder vor dem Anreiben in der Perlmühle oder der fertigen Pigmentpaste zugemischt.

Aus 90 Tlen der kationischen Bindemittelkombination (70 Tle Bindemittel und 30 Tle Vernetzungskomponente, siehe Tabelle 2) und 60 Tlen der Pigmentpaste (jeweils auf den Feststoff bezogen und ohne Berücksichtigung der zugesetzten Menge der Wismutsalze enthaltenden Zubereitung) werden unter praxisgerechten Bedingungen Lacke mit einem Pigment/Bindemittel-Verhältnis von 0,5 : 1 hergestellt.

Tabelle 2

| Lack | Bindemittelkomb. 70/30 Tle[1] | Zubereitung[1] | | % Wismut[2] |
|---|---|---|---|---|
| 1 | B1/VK1 | KAT 1 | 3 Tle | 1,0 |
| 2 | B2/VK2 | KAT 2 | 5 Tle | 1,8 |
| 3 | B3/VK3 | KAT 3 | 2,5 Tle | 0,8 |
| 4 | B1/VK2 | KAT 4 | 8 Tle | 2,4 |
| 5 | B2/VK3 | KAT 1 | 4 Tle | 1,4 |
| 6 | B3/VK1 | KAT 2 | 6 Tle | 2,2 |

[1] jeweils auf Feststoff bezogen

[2] Wismutgehalt bezogen auf den gesamten Feststoff der Lackbindemittel

3.2. Beurteilung der abgeschiedenen und anschließend eingebrannten Lackfilme

Die Lackansätze werden mit VEW auf einen Feststoffgehalt von 18 % eingestellt.

Nach einer Homogenisierungszeit von 24 Stunden werden die Lacke auf gereinigte, nicht phosphatierte Stahlbleche kathodisch abgeschieden. Die Abscheidungsbedingungen werden so gewählt, daß die Filme eine Trockenfilmstärke von 22 ± 2 μm aufweisen. Die Härtung erfolgt durch Einbrennen im Umluftofen (20 min/170°C).

Alle Lackierungen zeigen ausgezeichnete mechanische Eigenschaften (Schlagtest gemäß ASTM-D-2794-90: mind. 80 i.p.; kein Abplatzen beim Dornbiegeversuch gemäß ASTM D-522-88) sowie eine ausgezeichnete Korrosionsfestigkeit (Salzsprühtest gemäß ASTM B 117-90 nach 360 Stunden Prüfdauer: max. 2 mm)

3.3. Prüfung der Lagerbeständigkeit der Lacke 1 bis 6

Nach einem vierwöchigen "Rühr-Test" (Applikationsviskosität, Raumtemperatur) weisen die Lacke kein Sediment (unter 20 mg/l, Perlonsieb 28 μm Maschenweite) und eine unverminderte Reaktivität (Wiederholung der Prüfungen gemäß 3.2.) auf.

**Patentansprüche**

1. Verfahren zur Herstellung von Wismutsalze enthaltenden Zubereitungen zur Katalysierung der Vernetzungsreaktionen von kationischen Lackbindemitteln, <u>dadurch gekennzeichnet,</u> daß man

   A) 1,0 Mol Wismutoxid schrittweise mit insgesamt 4,0 Mol Milchsäure umsetzt, wobei man

   Aa) zuerst 1,0 Mol Wismutoxid und 2,0 Mol Milchsäure in Gegenwart von Wasser bei 20 bis 40°C während 30 bis 60 Minuten homogenisiert,
   Ab) das nach Aa) erhaltene Gemisch nach Zugabe von 1,0 Mol Milchsäure bei 30 bis 40°C wiederum während 30 bis 60 Minuten homogenisiert und
   Ac) den Vorgang gemäß Ab) wiederholt, wobei man so lange homogenisiert, bis sich die Farbe des Reaktionsansatzes von ursprünglich gelb auf weiß geändert hat,

   und

   B) anschließend die nach Aa) bis Ac) erhaltene Mischung von Wismutyllactat und Wismutlactat mit einem kationischen Lackbindemittel kombiniert, mit der Maßgabe, daß der Gehalt an Wismut, bezogen auf den gesamten Feststoffgehalt der Zubereitung, 25 bis 45 Gew.-%, vorzugsweise 30 bis 40 Gew.-%, beträgt.

2. Verfahren gemäß Anspruch 1, <u>dadurch gekennzeichnet,</u> daß man in B) durch Umesterung und/oder Umamidierung und/oder Umurethanisierung und/oder durch Reaktion endständiger Doppelbindungen vernetzbare kationische Lackbindemittel, vorzugsweise ein Pigmentpastenharz, einsetzt, wobei die Zubereitungen bevorzugt eine Viskosität im Bereich von 4000 bis 10000 mPa.s/23°C aufweisen.

3. Verwendung der gemäß den Ansprüchen 1 und 2 hergestellten Zubereitungen, gegebenenfalls in Form von Pigmentpasten, in Kombination mit durch Umesterung und/oder Umamidierung und/oder Umurethanisierung und/ oder durch Reaktion endständiger Doppelbindungen vernetzbaren kationischen Lackbindemitteln, wobei diese identisch mit oder verschieden von dem in der Zubereitung enthaltenen Lackbindemittel sind und gegebenenfalls als Dispersionen vorliegen, zur Formulierung von kathodisch abscheidbaren Elektrotauchlacken mit der Maßgabe, daß diese einen Gehalt an Wismut, bezogen auf den Feststoffgehalt des gesamten Lackbindemittels, von 0,5 bis 3,0 Gew.-%, vorzugsweise von 0,8 bis 2,5 Gew.-%, aufweisen.

4. Kathodisch abscheidbare Elektrotauchlacke mit einem Gehalt an Wismut, bezogen auf den Feststoffgehalt des gesamten Lackbindemittels, von 0,5 bis 3,0 Gew.-%, vorzugsweise von 0,8 bis 2,5 Gew.-%, welche die gemäß den Ansprüchen 1 und 2 hergestellten Zubereitungen, gegebenenfalls in Form von Pigmentpasten, sowie weitere durch Umesterung und/oder Umamidierung und/oder Umurethanisierung und/oder durch Reaktion endständiger Doppelbindungen vernetzbare kationische Lackbindemittel enthalten, wobei diese identisch mit oder verschieden von dem in der Zubereitung enthaltenen Lackbindemittel sind und gegebenenfalls als Dispersionen vorliegen.

**Claims**

1. Process for the preparation of formulations which comprise bismuth salts and are intended for catalyzing the crosslinking reactions of cationic coating binders,
   <u>characterized</u> in that

   A) 1.0 mol of bismuth oxide is reacted in steps with a total of 4.0 mol of lactic acid, the steps comprising

   Aa) first homogenizing 1.0 mol of bismuth oxide and 2.0 mol of lactic acid in the presence of water at from 20 to 40°C for from 30 to 60 minutes.
   Ab) adding 1.0 mol of lactic acid, to the mixture obtained in Aa) and again homogenizing at from 30 to 40°C for from 30 to 60 minutes, and
   Ac) repeating the procedure according to Ab), carrying out homogenization until the color of the reaction mixture has changed from an initial yellow to white,

   and
   B) the mixture of bismuthyl lactate and bismuth lactate obtained according to Aa) to Ac) is subsequently combined with a cationic coating binder, with the proviso that the content of bismuth, based on the overall solids content of the formulation, is from 25 to 45% by weight, preferably from 30 to 40% by weight.

2. Process according to claim 1, <u>characterized</u> in that in B) use is made of cationic coating binders crosslinkable by transesterification and/or transamidation and/or transurethanization and/or by reaction of terminal double bonds, preferably a pigment paste resin, the formulations preferably having a viscosity in the range from 4000 to 10,000 mPa.s/23°C.

3. Use of the formulations prepared according to claims 1 and 2, if desired in the form of pigment pastes, in combination with cationic coating binders crosslinkable by transesterification and/or transamidation and/or transurethanization and/or by reaction of terminal double bonds, these binders being identical to or different from the coating binders present in the formulation and being, if desired, in the form of dispersions, for the formulation of cathodic electrodeposition coating materials, with the proviso that these materials have a content of bismuth, based on the solids content of the overall coating binder, of from 0.5 to 3.0% by weight, preferably from 0.8 to 2.5% by weight.

4. Cathodic electrodeposition coating materials having a content of bismuth, based on the solids content of the overall coating binder, of from 0.5 to 3.0% by weight, preferably from 0.8 to 2.5% by weight, which comprise the formulations prepared in accordance with claims 1 and 2, if desired in the form of pigment pastes, and further cationic coating binders crosslinkable by transesterification and/or transamidation and/or transurethanization and/or by reaction of terminal double bonds, these binders being identical to or different from the coating binders present in the formulation and being, if desired, in the form of dispersions.

## Revendications

1. Procédé de fabrication de préparations contenant des sels de bismuth pour la catalyse des réactions de réticulation de liants pour peintures cationiques, caractérisé en ce que l'on fait réagir par paliers

    A) 1,0 mole d'oxyde de bismuth avec au total 4,0 moles d'acide lactique, auquel cas

        Aa) on homogénéise tout d'abord 1,0 mole d'oxyde de bismuth et 2,0 moles d'acide lactique pendant 30 à 60 minutes à 20-40°C en présence d'eau,
        Ab) on homogénéise à nouveau le mélange obtenu selon Aa) pendant 30 à 60 minutes après addition de 1,0 mole d'acide lactique à 30-40°C et
        Ac) on répète le processus selon Ab) en homogénéisant jusqu'à ce que la teinte du mélange réactionnel ait viré du jaune au départ au blanc, et

    B) que l'on combine ensuite le mélange de lactate de bismuthyle et de lactate de bismuth obtenu selon Aa) à Ac) avec un liant pour peintures cationique, sous réserve que la teneur en bismuth, rapportée au taux de solides global de la préparation, s'élève à 25-45% en poids, de préférence à 30-40% en poids.

2. Procédé selon la revendication 1, caractérisé en ce que, dans B), on met en oeuvre des liants pour peintures cationiques réticulables par transestérification et/ou par transamidation et/ou par transuréthannisation et/ou par réaction de doubles liaisons en bout de chaîne, de préférence une résine pour pâte pigmentaire, moyennant quoi les préparations présentent de préférence une viscosité dans la gamme de 4000 à 10000 mPa.s/23°C.

3. Utilisation des compositions préparées selon les revendications 1 et 2, éventuellement sous forme de pâtes pigmentaires, en association avec des liants pour peintures cationiques réticulables par transestérification et/ou par transamidation et/ou par transuréthannisation et/ou par réaction de doubles liaisons en bout de chaîne, ceux-ci étant identiques ou différents du liant pour peintures contenu dans la préparation et se trouvant éventuellement présents sous forme de dispersions, pour la formulation de peintures électrophorétiques déposables à la cathode sous réserve qu'elles présentent une teneur en bismuth, rapportée au taux de solides du liant pour peintures total, de 0,5 à 3,0% en poids, de préférence de 0,8 à 2,5% en poids.

4. Peintures électrophorétiques déposables à la cathode avec une teneur en bismuth, rapportée au taux de solides du liant pour peintures total, de 0,5 à 3,0% en poids, de préférence de 0,8 à 2,5% en poids, qui contiennent les compositions préparées selon l'invention, éventuellement sous forme de pâtes pigmentaires, ainsi que d'autres liants pour peintures cationiques réticulables par transestérification et/ou par transamidation et/ou par transuréthannisation et/ou par réaction de doubles liaisons en bout de chaîne, ceux-ci étant identiques ou différents du liant pour peintures contenu dans la préparation et se trouvant éventuellement présents sous forme de dispersions.